# DEMANDE DE BREVET EUROPEEN

(11) **EP 4 309 777 A1**
(43) Date de publication de la demande: **24.01.2024**
(21) Numéro de dépôt: 23178462.0
(22) Date de dépôt: 09.06.2023
(51) Int. Cl.: B01J 6/00, B01J 8/06, B01J 19/00, B01J 8/00

(54) **FOUR POUR METTRE EN OEUVRE UN PROCÉDÉ ENDOTHERMIQUE**

(30) Priorité: 18.07.2022 FR 2207335
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: TUDORACHE, Diana, 78350 Jouy en Josas (FR)
(74) Mandataire: Air Liquide

(57) **Abrégé**

Four pour mettre en oeuvre un procédé endothermique comprenant :
- une chambre de combustion (1) délimitée par une paroi (2),
- au moins un réacteur tubulaire (3) positionné dans la chambre de combustion (1),
- au moins un brûleur (4b) agencé dans la chambre de combustion (1) pour apporter au réacteur tubulaire (3) la chaleur nécessaire au procédé endothermique,
- le brûleur (4b) comprenant au moins une buse de décharge d'une flamme, la buse étant orientée selon un axe (A' ; A") de la buse,
caractérisé en ce que la chambre (1) possède, sur au moins une partie d'une surface interne de la paroi (2), un profil interne (7) convexe et incurvé dans une direction de l'axe (A' ; A") de la buse, le profil étant adjacent audit brûleur (4b).

## Description

L'invention appartient au domaine des fours utilisés dans des procédés endothermiques tels que le craquage de charges d'hydrocarbures réalisé dans des réacteurs à chauffages externes, en particulier des fours pour le reformage à la vapeur d'hydrocarbures, essentiellement de méthane. Le procédé de reformage à la vapeur d'hydrocarbures est connu sous son acronyme anglais SMR pour « steam méthane reforming ».

Le procédé SMR est essentiellement basé sur la réaction de reformage du méthane qui en présence de vapeur d'eau conduit à un mélange comprenant principalement de l'hydrogène et du monoxyde de carbone. La réaction lente et endothermique requiert un catalyseur et un apport de chaleur additionnel. De manière générale, les performances du reformage sont limitées non par la cinétique des réactions mais par le transfert de chaleur.

Dans la pratique, un reformeur SMR comprend des réacteurs tubulaires (appelés aussi tubes de reformage ou plus simplement tubes) qui sont placés dans un four, qui contiennent du catalyseur - souvent sous forme de pastilles ou granules - et sont alimentés avec un mélange gazeux réactionnel de méthane (CH4) et de vapeur d'eau.

Les configurations les plus usuelles pour les fours de reformage sont du type chauffage vertical descendant (chauffage par le haut, chauffage en voûte ou « top fired » en anglais), chauffage vertical ascendant (chauffage par la base ou sole du four ou « bottom fired » en anglais), chauffage latéral ou chauffage latérale en terrasse.

Les fours à chauffage vertical (brûleurs dans la voûte ou dans la sole) sont constitués typiquement d'une chambre de combustion de forme le plus souvent rectangulaire, munie d'un revêtement réfractaire et contenant plusieurs rangées de tubes. La chaleur nécessaire au reformage est apportée par des brûleurs eux-mêmes placés en rangées entre les rangées de tubes sauf pour deux rangées de brûleurs qui sont placées entre une rangée de tubes et une surface interne latérale du four parallèle aux rangées de tubes. Les rangées de brûleurs adjacentes à deux rangées de tubes sont dites rangées internes - leurs brûleurs sont dits brûleurs internes -, chaque rangée de brûleurs internes chauffe les rangées de tubes situées de part et d'autre. Les rangées de brûleurs situées entre une rangée de tubes et la surface interne latérale du four - dit aussi mur latéral ou mur adjacent - ne chauffent qu'une rangée de tubes.

Les brûleurs de ces rangées - dits brûleurs externes - doivent donc disposer d'une puissance de chauffe moindre que les brûleurs internes.

Le principal objectif lors de la conception du four et lors de son utilisation est de maximiser le transfert de chaleur des brûleurs aux tubes - à partir de flammes, mais aussi de la paroi du four et des gaz de fumées chauds -, tout en respectant pour chaque tube la contrainte de la température d'opération maximale. La température d'opération maximale (ou selon son acronyme anglais la « DTT » pour « design tube température » ou « MOT » pour « maximum operating température ») dépend de plusieurs facteurs, en particulier de la charge mécanique du tube (essentiellement la pression du gaz d'alimentation), des propriétés mécaniques des alliages utilisés pour les tubes et de la durée de vie que l'on souhaite pour ces tubes exposés aux risques de fluage et de vieillissement thermique.

Intensifier la chaleur transférée aux tubes a un impact positif direct, en augmentant la productivité et en améliorant la compacité du four ce qui est appréciable en termes de dépenses d'investissement et d'exploitation. Toutefois augmenter la chaleur transférée aux tubes signifie typiquement augmenter le niveau de températures des tubes, donc ou bien réduire leur durée de vie ou bien faire appel à des alliages plus résistants qui sont beaucoup plus chers.

Un manque d'homogénéité de la distribution de chaleur dans le four va faire que certains tubes seront plus chauds que les autres, c'est pourquoi les profils de température des tubes sont des données critiques aussi bien lors de la conception que durant l'opération du four. Les profils de température des tubes - température dite de peau ou TST selon son acronyme anglais (pour « tube skin température ») ou TWT selon son acronyme anglais (pour « tube wall température ») ou simplement température de tube - fournissent des informations décisives pour la recherche d'un compromis entre performance et durabilité ; or un bon compromis est réellement essentiel.

Lors des opérations, les performances du four sont limitées par la température du tube le plus chaud (connue aussi en tant que température maximale de tube ou MTT selon son acronyme anglais pour « maximum tube température ») ; cette température ne doit pas être supérieure à la MOT. Dans le même temps, la performance du procédé, i.e. la productivité ou l'efficacité du reformage dépend de la moyenne des flux de chaleur transmis aux tubes et de leurs températures. Cela signifie donc que la performance du four est d'autant meilleure que la différence entre la température du tube le plus chaud (MTT) et la température du tube le plus froid est petite.

Une conséquence inhérente aux contraintes de conception du four de reformage est le manque d'homogénéité dans le transfert de chaleur entre les rangées de tubes au sein du four. Une raison en particulier est la différence entre les flux de quantité de mouvement générés par la décharge des produits de combustion, entre les rangées de brûleurs externes et internes. En effet, les brûleurs externes ne devant fournir de la chaleur qu'à des tubes situés d'un même côté, sont opérés à une puissance de chauffe plus faible que les brûleurs internes - qui eux chauffent le double de tubes, répartis de part et d'autre - soit généralement entre 50% et 80% de l'allure de chauffe des brûleurs internes. Cette différence de l'allure de chauffe et donc du débit massique implique donc que les produits de combustion déchargés par les brûleurs externes ont un flux de quantité de mouvement plus faible que ceux des brûleurs internes. Les flammes des brûleurs externes sont en conséquence déviées vers le milieu du four rendant difficile d'équilibrer la puissance thermique entre les rangées de tubes.

Toutes les solutions proposées au problème de déviation des flammes ont en commun de nécessiter des modifications majeures en relation avec les brûleurs ou avec les collecteurs de distribution des produits de combustion des brûleurs, ce qui les rend difficilement applicables aux unités existantes. En particulier, des modifications au niveau des brûleurs eux-mêmes sont difficiles à mettre en oeuvre, notamment pour un four préexistant.

Il est donc souhaitable de proposer, pour un four préexistant, une solution qui permette d'éviter un phénomène de déviation d'une flamme de brûleur et ainsi de contrôler l'homogénéité du transfert de chaleur à la réaction endothermique.

Il est en particulier souhaitable de pouvoir disposer d'un four qui assure un transfert de chaleur plus uniforme entre les multiples rangées de tubes de reformage, permettant ainsi un gain d'efficacité à l'installation et d'ajuster la quantité de chaleur transférée à la rangée de tubes externes, de sorte qu'elle corresponde à celle reçue par les rangées de tubes internes.

L'invention a donc pour objet un four pour mettre en oeuvre un procédé endothermique comprenant :
- une chambre de combustion délimitée par une paroi,
- au moins un réacteur tubulaire positionné dans la chambre de combustion,
- au moins un brûleur agencé dans la chambre de combustion pour apporter au réacteur tubulaire la chaleur nécessaire au procédé endothermique,
- le brûleur comprenant au moins une buse de décharge d'une flamme, la buse étant orientée selon un axe de la buse,
caractérisé en ce que la chambre possède, sur au moins une partie d'une surface interne de la paroi, un profil interne convexe et incurvé dans une direction de l'axe de la buse, le profil étant adjacent audit brûleur et en regard de l'axe de la buse.

Le flux de fluide constituant la flamme (ou jet) en contact avec le profil interne aura tendance à suivre la courbure du profil plutôt que de continuer à se déplacer en ligne droite. Le phénomène de déviation des flammes des brûleurs externes vers le milieu du four est ainsi compensé et la chaleur est transférée plus uniformément entre les tubes.

Le profil est en particulier considéré dans un plan de coupe de la chambre confondu avec l'axe de la buse.

Selon un mode de réalisation, la buse est orientée selon un axe longitudinal de la buse.

Selon un mode de réalisation, la buse est configurée pour projeter dans la direction de l'axe de la buse les gaz de combustion dans la chambre de combustion.

Selon un mode de réalisation :
- l'axe de la buse n'est pas sécant avec le profil interne,
- une distance entre une tangente au profil interne, parallèle à l'axe de la buse, et l'axe de la buse est une distance P,
- une dimension interne de la buse à l'extrémité de décharge de ladite buse, dans une direction dans laquelle la distance P est mesurée, est une dimension D,
- un ratio P / D étant compris entre 0 et 2.

De préférence, le ratio P / D est compris entre 0 et 1,15. En particulier, la distance P entre la tangente et l'axe de la buse est comprise entre 0 et 0,6 m.

Selon un mode de réalisation alternatif, l'axe de la buse est sécant avec le profil interne et le ratio P / D est compris entre 0 et 0,5. De préférence, le ratio P / D est compris entre 0 et 0,25. En particulier, la distance P entre la tangente et l'axe de la buse est comprise entre 0 et 0,15 m.

Selon un mode de réalisation, à partir d'un point de la tangente touchant le profil interne, le profil interne s'étend sur une longueur L le long de la tangente, le profil interne ayant, à l'intérieur de la chambre, une épaisseur R, un ratio R / L étant inférieur à 1,1 ; de préférence inférieur ou égal à 1, de préférence inférieur ou égal à 0,4 ; de préférence inférieur ou égal à 0,3.

Selon un mode de réalisation :
- une distance mesurée le long de l'axe de la buse, entre le point de la tangente touchant le profil interne et un sommet de la buse, est une distance H,
- une distance I mesurée le long de l'axe de la buse, entre un sommet de la buse et une surface interne de la paroi la plus éloignée du sommet de la buse, est une distance I,
- un ratio H / 1 étant inférieur à 1/2, de préférence inférieur à 1/3, de préférence inférieur à 1/4.

La distance H est notamment inférieure à 6 mètres, de préférence est inférieure à 2,5 mètres.

Selon un mode de réalisation :
- une pluralité de réacteurs tubulaires sont positionnés dans la chambre de combustion,
- une pluralité de brûleurs sont agencés dans la chambre de combustion pour apporter aux réacteurs tubulaires la chaleur nécessaire au procédé endothermique,
- les réacteur tubulaires s'étendent longitudinalement entre une première surface interne de la paroi et une deuxième surface interne de la paroi, opposée à la première,
- les réacteurs tubulaires sont agencés en rangées et les brûleurs sont montés sur au moins l'une des première et deuxième surfaces internes, des brûleurs dits internes étant disposés entre deux rangées de réacteurs tubulaires et des brûleurs dits externes étant disposés entre une rangée de réacteurs tubulaires et une surface interne latérale de la paroi, la surface interne latérale reliant la première surface interne et la deuxième surface interne,
- chacun des brûleurs externes comprenant au moins une buse de décharge d'une flamme, la buse étant orientée selon un axe de la buse,
- la chambre possède, sur au moins une partie de la surface interne latérale, un profil convexe et incurvé dans une direction de l'axe de la buse de chacun des brûleurs externes, le profil étant adjacent à chacun desdits brûleurs externes et en regard de l'axe de la buse de chacun des brûleurs externes.

Selon un mode de réalisation, la buse de chacun des brûleurs externes est orientée selon un axe longitudinal de ladite buse.

Selon un mode de réalisation, la buse de chacun des brûleurs externes est configurée pour projeter dans la direction de l'axe de ladite buse les gaz de combustion dans la chambre de combustion.

Selon un mode de réalisation, le profil interne comprend une protubérance qui s'étend de manière continue sur la surface interne latérale, la protubérance étant adjacente à une pluralité des brûleurs externes, la protubérance étant en regard de l'axe de la buse de chacun des brûleurs externes parmi cette pluralité de brûleurs externes.

Selon un mode de réalisation alternatif, le profil interne comprend une pluralité de protubérances, chacune desdites protubérances étant adjacente à un brûleur externe, chacune des protubérances étant en regard de l'axe de la buse du brûleur externe dont elle est adjacente.

Selon un mode de réalisation, pour au moins une partie ou chacun des brûleurs externes :
- l'axe de la buse n'est pas sécant avec le profil interne,
- une distance entre une tangente au profil interne, parallèle à l'axe de la buse, et l'axe de la buse est une distance P,
- une dimension interne de la buse à l'extrémité de décharge de ladite buse, dans une direction dans laquelle la distance P est mesurée est une dimension D,
- un ratio P / D étant compris entre 0 et 2.

De préférence, le ratio P / D est compris entre 0 et 1,15. En particulier, la distance P entre la tangente et l'axe de la buse est comprise entre 0 et 0,6 m.

Selon un mode de réalisation, pour au moins une partie ou chacun des brûleurs externes, l'axe de la buse est sécant avec le profil interne et le ratio D / P est compris entre 0 et 0,5. De préférence, le ratio D / P est compris entre 0 et 0,25. En particulier, la distance P entre la tangente et l'axe de la buse est comprise entre 0 et 0,15 m.

Selon un mode de réalisation, pour chacun des brûleurs externes, à partir d'un point de la tangente touchant le profil interne, le profil interne s'étend sur une longueur L le long de la tangente, le profil interne ayant, à l'intérieur de la chambre, une épaisseur R, un ratio R / L étant inférieur à 1,1 , de préférence inférieur ou égal à 1, de préférence inférieur ou égal à 0,4 , de préférence inférieur ou égal à 0,3.

Selon un mode de réalisation, pour chacun des brûleurs externes :
- les brûleurs externes sont montés sur la première surface,
- une distance mesurée le long de l'axe de la buse de chacun des brûleurs externes, entre le point de la tangente touchant le profil interne et un sommet de la buse, est une distance H,
- une distance mesurée le long de l'axe de la buse de chacun des brûleurs externes, entre un sommet de la buse et la deuxième surface, est une distance I,
- un ratio H / I étant inférieur à 1/2, de préférence inférieur à 1/3, de préférence inférieur à 1/4.

La distance H est notamment inférieure à 6 mètres, de préférence est inférieure à 2,5 mètres.

Selon un mode de réalisation, les brûleurs externes sont configurés pour fonctionner à une puissance comprise entre 45 et 55% de celle des brûleurs internes.

L'invention a également pour objet une méthode de réaménagement d'un four pour mettre en oeuvre un procédé endothermique, le four comprenant :
- une chambre de combustion délimitée par une paroi,
- au moins un réacteur tubulaire positionné dans la chambre de combustion,
- au moins un brûleur agencé dans la chambre de combustion pour apporter au réacteur tubulaire la chaleur nécessaire au procédé endothermique,
- le brûleur comprenant au moins une buse de décharge d'une flamme, la buse étant orientée selon un axe de la buse,
la méthode comprenant une étape de modification d'un profil d'au moins une partie d'une surface interne de la paroi de telle sorte que le profil soit convexe et incurvé dans une direction de l'axe de la buse, le profil étant adjacent audit brûleur et en regard de l'axe de la buse.

Selon un mode de réalisation, la buse est orientée selon un axe longitudinal de la buse.

Selon un mode de réalisation, la buse est configurée pour projeter dans la direction de l'axe de la buse les gaz de combustion dans la chambre de combustion.
La figure 1 représente la configuration d'un four pour mettre en oeuvre un procédé endothermique selon l'état de l'art ;
La figure 2 est une vue d'un des brûleurs d'un four dans une configuration selon l'art antérieur ;
La figure 3 est une vue d'un des brûleurs d'un four dans une configuration selon l'invention ;
La figure 4 est une vue d'un des brûleurs du four dans selon l'invention dans un dimensionnement alternatif à celui de la figure 3 ;
La figure 5 est une vue agrandie de la figure 4.

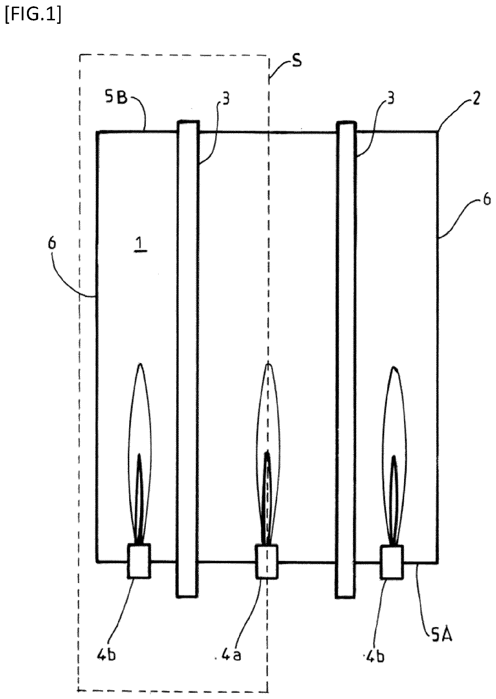

Un four selon l'art antérieur pour mettre en oeuvre un procédé endothermique est représenté schématiquement sur la figure 1.

Le four comprend une chambre de combustion 1 (ou firebox en anglais). La chambre de combustion 1 est délimitée par une paroi 2. Du point de vue de l'intérieur de la chambre de combustion 1, il existe au moins une surface interne 5A ; 5B ; 6 qui délimite l'espace intérieur de la chambre de combustion 1.

Des réacteur tubulaires ou tubes 3 sont agencés dans la chambre de combustion 1 et s'étendent longitudinalement entre une première surface interne 5A de la paroi 2 et une deuxième surface interne 5B de la paroi 2, opposée à la première surface interne 5A. Dans les modes de réalisation représentés, les réacteurs tubulaires 3 s'étendent verticalement (selon un axe vertical). Les tubes 3 sont conçus pour mettre en oeuvre une réaction endothermique et contiennent un catalyseur pour convertir un gaz d'alimentation.

Des brûleurs 4a ; 4b sont agencés pour apporter aux réacteurs tubulaires 3 la chaleur nécessaire à la réaction endothermique. Les brûleurs 4a ; 4b comprennent une buse orientée selon un axe longitudinal de la buse, qui peut être l'axe vertical ou non. La buse est configurée pour projeter dans la direction de l'axe longitudinal les gaz de combustion dans la chambre de combustion 1. Les buses des brûleurs 4a ; 4b peuvent être orientées selon des axes ou directions différentes les unes par rapport aux autres.

Dans le mode de réalisation de la figure 1, le four est un four à chauffage vertical et les brûleurs 4a ; 4b sont montés dans la sole de la chambre de combustion 1 (c'est-à-dire la surface interne 5A inférieure ou constituant le plancher de la chambre de combustion 1). On parle alors de chauffage par le bas ou chauffage vertical ascendant (« bottom-fired », « up-fired » or « floor-fired » en anglais). La chambre de combustion 1 a, dans ce mode de réalisation, une forme parallélépipédique rectangle. L'invention couvre cependant également des configurations dans lesquelles les brûleurs sont montés dans la voûte de la chambre de combustion 1 (c'est-à-dire la surface interne supérieure 5B ou constituant le plafond de la chambre de combustion 1). On parle alors de chauffage par le haut ou chauffage descendant (« top-fired », « down fired » or « roof-fired » en anglais).

Des brûleurs 4a dit internes sont disposés entre deux rangées de tubes 3. Autrement dit, des rangées de tubes 3 sont disposés de part et d'autre d'un brûleur interne 4a. Des brûleurs 4b dits externes sont disposés entre une rangée de tubes 3 et une surface interne 6 de la chambre, latérale reliant la voûte à la sole de la chambre. Autrement dit, la surface interne latérale 6 est disposée d'un côté d'un brûleur externe 4b et une rangée de tubes 3 est disposée de l'autre côté dudit brûleur externe 4b.

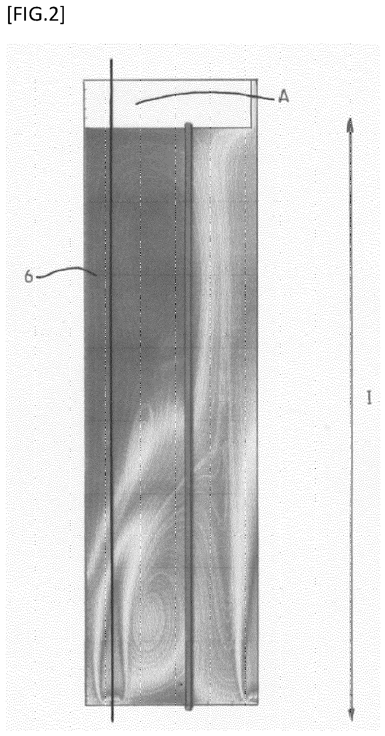

Par souci de simplification, sur les figures 2, 3, 4 et 5, la flamme d'un seul brûleur externe 4b est représentée dans une configuration selon l'art antérieur pour la figure 2 et selon l'invention pour les figures suivantes. Ces vues correspondent à la zone délimitée en pointillés sur la figure 1, englobant la moitié de la chambre de combustion en partant de l'axe de symétrie S. Dans ces modes de réalisation, les brûleurs 4a ; 4b sont montés dans la sole.

Les brûleurs externes 4b ne chauffent qu'une rangée de tubes 3 au lieu de deux comme les brûleurs internes 4a. Les brûleurs externes 4b sont donc typiquement configurés pour fonctionner à une puissance comprise entre 45 et 55% de celle des brûleurs internes 4a.

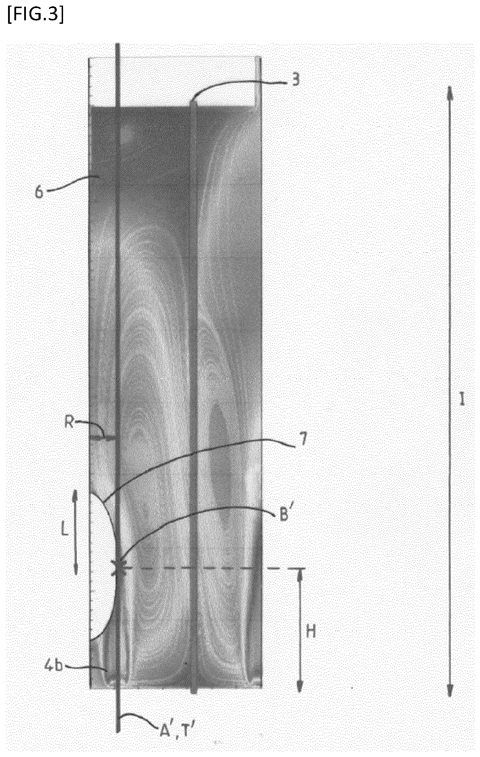

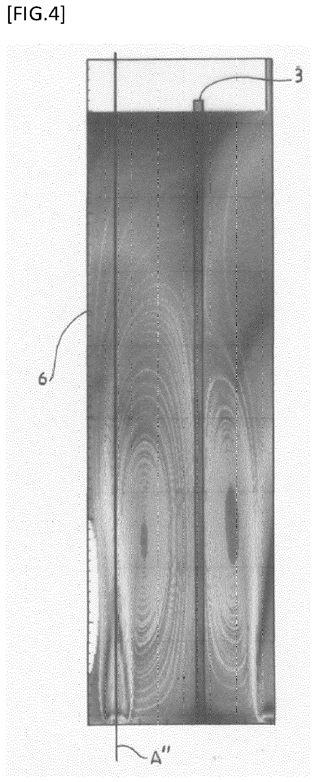

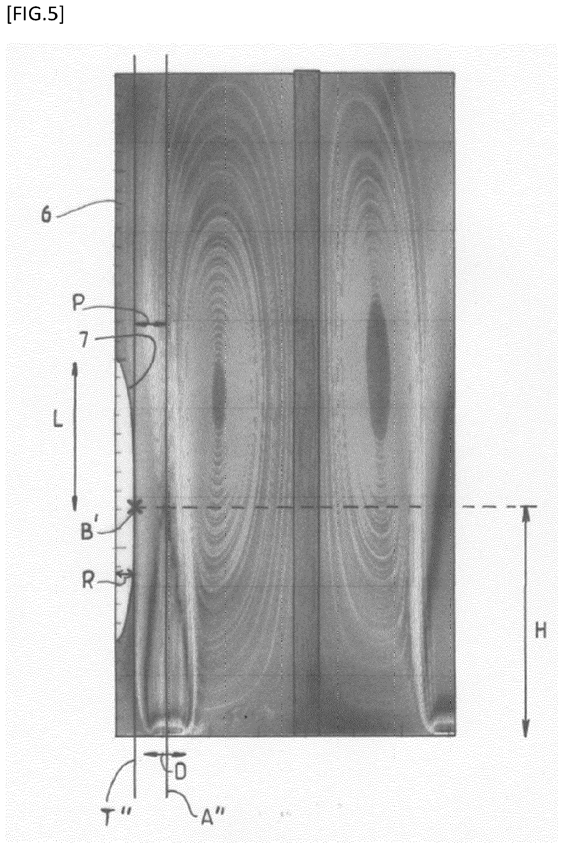

Le brûleur 4b comprend une buse de décharge d'une flamme émise par le brûleur 4b. La buse étant orientée selon un axe matérialisé par la droite A pour la figure 2, par la droite A' pour la figure 3 et par la droite A" pour les figures 4 et 5. L'axe selon lequel est orienté une buse passe par le centre de ladite buse. Dans la configuration selon l'art antérieur, un phénomène de déviation de la flamme vers le milieu du four se produit. Il est en effet visible sur la figure 2 que la partie supérieure de la flamme dévie de l'axe A de la buse.

Dans la configuration selon les figures 3, 4 et 5, la chambre possède, sur une surface interne latérale 6 reliant la voûte et la sole, un profil interne 7 convexe. Le profil 7 est incurvé dans une direction de l'axe de la buse. Le profil interne 7 est adjacent au brûleur externe et en regard de l'axe A' ; A" de la buse de chacun des brûleurs externes 4b. L'espace interne de la chambre 1 telle que délimitée par la paroi 2 est ainsi profilé de manière convexe du point de vue de l'intérieur de la chambre et incurvé sur une partie d'une surface interne de la paroi 2. Le profil 7 est considéré dans un plan de coupe de la chambre 1 confondu avec l'axe A' ; A" de la buse, le plan étant orthogonal à la surface interne de la paroi 2, sur une surface interne de la paroi 2 (ici la surface interne latérale 6), la surface interne étant profilée.

Le profil interne 7 comprend par exemple au moins une protubérance qui s'étend de manière continue sur la surface interne latérale 6, la protubérance étant adjacente à une pluralité des brûleurs externes 4b (voir la totalité des brûleurs externes 4b), la protubérance étant en regard de l'axe A' ; A" de la buse de chacun des brûleurs externe 4b parmi cette pluralité de brûleurs externes 4b.

Dans un mode de réalisation alternatif, le profil interne 7 comprend une pluralité de protubérances, chacune desdites protubérances étant adjacente à un seul des brûleurs externes 4b, chacune des protubérances étant en regard de l'axe A' ; A" de la buse du brûleur externe 4b dont elle est adjacente.

Par « profil convexe », il faut comprendre qu'un segment reliant deux points quelconques d'une surface du profil 7 (la surface profilée) s'étend exclusivement en dehors de l'espace intérieur de la chambre de combustion 1. Le profil est donc convexe du point de vue de la chambre de combustion 1 ou bombé vers l'intérieur de la chambre 1.

Par « profil adjacent à au moins un brûleur(s) », il faut comprendre que le ou les brûleur(s) 4b sont à proximité immédiate du profil 7, de telle sorte qu'aucun élément du four ne s'étend ou ne fait obstacle entre la flamme émise par ledit brûleur 4b et le profil. Autrement dit, l'axe de la buse est directement en regard de la surface profilée. Le profil est disposé directement en regard des brûleurs externes dans la configuration des figures 3 et 4.

Il est possible de définir sur la figure 3 une tangente T' à la surface profilée, tangente T' qui est parallèle à l'axe A' de la buse. Dans une configuration dans laquelle la buse est orientée verticalement et la chambre de combustion 1 a une forme parallélépipédique rectangle, la tangente est parallèle à la surface interne latérale 6. Le profil interne 7 présente une courbure non nulle par rapport à la tangente T' qui fait référentiel pour la courbure. La tangente T' touche la surface profilée en un point B', sans traverser ladite surface. La surface profilée et la tangente T' forment ainsi un angle nul au point B'. En parcourant la surface profilée dans la direction de l'axe A', la surface profilée s'éloigne localement de la tangente T' (et de l'axe A'), ce qui caractérise la courbure dans la direction de l'axe A'. La courbure se considère sur une projection de l'axe A' ou de la tangente T' sur la surface profilée, projection qui forme un arc sur la surface profilée. Une surface courbe est une surface dont une tangente change de direction lorsque la surface est parcourue, sans que la surface ne forme d'arrêtés sur le parcours en question.

Le profil interne 7 est agencé adjacent aux brûleurs externes 4b de sorte que la flamme émise par un brûleur externe 4b lèche la surface profilée : il existe une ligne de j et de la flamme qui atteint la surface profilée tangentiellement et s'écoule directement le long de la du profil 7. Le flux de fluide constituant la flamme (ou jet) en contact avec le profil 7 aura tendance à suivre la courbure du profil 7 (effet Coand 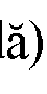 ) plutôt que de continuer à se déplacer en ligne droite ou d'être dévié vers le milieu du four comme dans l'état de l'art. Le phénomène de déviation des flammes des brûleurs externes vers le milieu du four est ainsi compensé et la chaleur est transférée plus uniformément entre les tubes 3.

Une courbure du profil interne 7 s'étend à partir du point B' sur une longueur L le long de la tangente. La longueur est mesurée le long de la tangente T', entre le point B' et, par exemple, un point ou le profil 7 forme une arrête, c'est-à-dire cesse d'être courbé, ou bien jusqu'à une limite du profil interne 7 convexe (à un endroit où la surface interne cesse d'être convexe). Le long de la courbure considérée du profil 7, celui-ci s'éloigne de la tangente T' d'une distance R jusqu'à la fin de la courbure, ce qui définit l'épaisseur du profil interne. La distance R ainsi considérée correspond à l'éloignement maximum par rapport à la tangente T' du profil 7 le long de sa courbure. La distance est mesurée le long d'une direction perpendiculaire à la tangente T' et à l'axe A'. La figure 3 représente un mode de réalisation de l'invention dans lequel un rapport de R / L est égal à 0,37.

La figure 3, montre une configuration du four dans laquelle le brûleur 4b et le profil interne 7 sont disposés l'un par rapport à l'autre dans la chambre de combustion 1 de telle sorte que l'axe A' de la buse ne coupe pas ou ne traverse pas la surface profilée. On dit alors que l'axe A' n'est pas sécant avec le profil interne 7 (autrement dit, l'axe A' ne traverse pas la surface profilée). Une distance P entre la tangente T' et l'axe A' est, dans les modes de réalisation de la figure 3, égale à zéro. Autrement dit, la tangente T' et l'axe A' sont confondus. On peut définir une dimension interne D de la buse dans la direction dans laquelle la distance P est mesurée. La dimension D est considérée à l'extrémité de décharge de la buse, par laquelle les gaz de combustion (la flamme) sont projetés ou déchargés. La buse définit un canal interne de circulation et projection des gaz de combustion et D correspond à une dimension interne maximale de la buse, dans la direction considérée, dans ce canal et à l'extrémité de décharge de la buse. D sert de dimension de référence. Lorsque la buse est de forme circulaire, la dimension D correspond à un diamètre de la buse.

La description des paragraphes précédents s'applique par analogie au mode de réalisation des figures 4 et 5, avec une tangente T" parallèle à l'axe A" et un point B" où la tangente T" touche la surface profilée. Dans ce mode de réalisation, un rapport de R / L est égal à 0,22. La figure 5 est un zoom de la figure 4 sur la zone du profil 7 sur lequel les dimensions sont plus visibles. Par ailleurs, une distance P entre la tangente T" et l'axe A" est non-nulle et égale à environs une fois la dimension D (P/D = 1). La distance P est notamment environ égale à 0,6 mètres et la dimension D également.

Dans le mode de réalisation de la figure 3, le brûleur 4b et le profil 7 sont disposés l'un par rapport à l'autre de telle sorte que le profil 7 est en partie d'aplomb par rapport au brûleur 4b, certaines lignes de jet d'une flamme émise par le brûleur 4b pouvant impacter le profil 7 de manière non tangentielle.

Dans une autre disposition non-représentée du brûleur 4b et du profil 7, l'axe A' est sécant avec le profil 7. C'est-à-dire que l'axe A' coupe ou traverse la surface profilée en deux points du fait de la convexité du profil 7. Un ratio P / D est notamment compris entre 0 et 0,5. La distance P est notamment comprise entre 0 et 0,15 mètres. La flamme émise étant typiquement plus large que la buse dans sa dimension D, le profil 7 peut ainsi être disposé en aplomb de la buse sur l'essentiel voire la quasi-totalité de la dimension D.

Les distances visées entre la tangente T' ; T" et l'axe A' ; A" dans le cadre dans l'invention sont exprimées en valeur absolue.

De préférence, une distance H mesurée le long d'une direction de l'axe A' ; A" de la buse, entre le point B' ; B" et un sommet de la buse, correspond à moins de la moitié d'une distance I mesurée le long de la direction de l'axe A' ; A" de la buse, entre un sommet de la buse et la voûte du four, de préférence à moins du tiers de la distance I, de préférence à moins du quart de la distance I, de préférence à moins d'un huitième de la distance I. Autrement dit, le point B' ; B" se trouve à une hauteur H par rapport au sommet de la buse. La distance H est notamment inférieure ou égale à 6 mètres. La distance H mesurée le long de l'axe A' ; A" correspond donc à la distance entre le projeté du point B sur l'axe A' ; A" et le sommet de la buse.

Le point B' ; B" est par exemple situé à une hauteur H approximativement égale à 6 mètres par rapport aux brûleurs 4b et la distance I est environ égale à 24 mètres.

La configuration selon l'invention, ici représentée pour un seul brûleur externe 4b, peut être extrapolée sur une pluralité des brûleurs externes 4b du four, voire la totalité des brûleurs externes 4b.

Le procédé endothermique est par exemple un procédé de reformage et les réacteurs tubulaires 3 sont des tubes de reformage. Le four est dans ce cas un four de reformage, également appelé reformeur. On peut citer comme exemple un procédé de vaporeformage du méthane.

L'invention concerne également une méthode de réaménagement (« revamping » en anglais) d'un four selon l'art antérieur, la méthode comprenant une étape de modification d'un profil interne 7 d'au moins une partie d'une surface interne 6 de la paroi 2 de telle sorte que le profil 7 soit convexe et incurvé dans une direction de l'axe A' ; A" de la buse d'au moins un brûleur externe, le profil 7 étant adjacent audit un brûleur externe 4b et en regard de l'axe A' ; A".

L'invention propose ainsi une solution flexible d'adaptation d'un four existant afin de lutter contre un phénomène de déviation d'une flamme d'un brûleur, solution qui n'impose pas de modifier le brûleur lui-même.

## Revendications

1. Four pour mettre en oeuvre un procédé endothermique comprenant :
- une chambre de combustion (1) délimitée par une paroi (2),
- au moins un réacteur tubulaire (3) positionné dans la chambre de combustion (1),
- au moins un brûleur (4b) agencé dans la chambre de combustion (1) pour apporter au réacteur tubulaire (3) la chaleur nécessaire au procédé endothermique,
- le brûleur (4b) comprenant au moins une buse de décharge d'une flamme, la buse étant orientée selon un axe (A' ; A") de la buse,
**caractérisé en ce que** la chambre (1) possède, sur au moins une partie d'une surface interne de la paroi (2), un profil interne (7) convexe et incurvé dans une direction de l'axe (A' ; A") de la buse, le profil étant adjacent audit brûleur (4b) et en regard de l'axe (A' ; A").

2. Four selon la revendication précédente, dans lequel :
- l'axe (A' ; A") de la buse n'est pas sécant avec le profil interne (7),
- une distance entre une tangente (T' ; T") au profil interne (7), parallèle à l'axe (A' ; A") de la buse, et l'axe (A' ; A") de la buse est une distance P,
- une dimension interne de la buse à l'extrémité de décharge de ladite buse, dans une direction dans laquelle la distance P est mesurée, est une dimension D,
- et un ratio P / D est compris entre 0 et 2, de préférence compris entre 0 et 1,15.

3. Four selon la revendication 1, dans lequel :
- l'axe (A' ; A") de la buse est sécant avec le profil interne (7),
- une distance entre une tangente (T' ; T") au profil interne (7), parallèle à l'axe (A' ; A") de la buse, et l'axe (A' ; A") de la buse est une distance P,
- une dimension interne de la buse à l'extrémité de décharge de ladite buse, dans une direction dans laquelle la distance P est mesurée est une dimension D,
- et un ratio P / D est compris entre 0 et 0,5 , de préférence compris entre 0 et 0,25.

4. Four selon l'une des revendications précédentes, dans lequel le profil interne (7) s'étend sur une longueur L le long d'une tangente (T' ; T") au profil interne, parallèle à l'axe (A' ; A") de la buse, à partir d'un point de la tangente (T' ; T") touchant le profil interne (7), le profil interne (7) ayant, à l'intérieur de la chambre, une épaisseur R, un ratio R / L étant inférieur à 1,1 ; de préférence inférieur ou égal à 1, de préférence inférieur ou égal à 0,4 ; de préférence inférieur ou égal à 0,3.

5. Four selon l'une des revendications précédentes, dans lequel :
- une distance mesurée le long de l'axe (A' ; A") de la buse, entre le point de la tangente (T' ; T") touchant le profil interne (7) et un sommet de la buse, est une distance H,
- une distance I mesurée le long de l'axe (A' ; A") de la buse, entre un sommet de la buse et une surface interne de la paroi (2) la plus éloignée du sommet de la buse, est une distance I,
- un ratio H / I étant inférieur à 1/2, de préférence inférieur à 1/3, de préférence inférieur à 1/4.

6. Four selon l'une des revendications précédentes, dans lequel :
- une pluralité de réacteurs tubulaires (3) sont positionnés dans la chambre de combustion (1),
- une pluralité de brûleurs (4a ; 4b) sont agencés dans la chambre de combustion (1) pour apporter aux réacteurs tubulaires (3) la chaleur nécessaire au procédé endothermique,
- les réacteur tubulaires (3) s'étendent longitudinalement entre une première surface interne (5A) de la paroi (2) et une deuxième surface interne (5B) de la paroi (2), opposée à la première,
- les réacteurs tubulaires (3) sont agencés en rangées et les brûleurs (4a ; 4b) sont montés sur au moins l'une des première et deuxième surfaces internes (5A ; 5B), des brûleurs (4a) dits internes étant disposés entre deux rangées de réacteurs tubulaires (3) et des brûleurs (4b) dits externes étant disposés entre une rangée de réacteurs tubulaires (3) et une surface interne latérale (6) de la paroi (2), la surface interne latérale (6) reliant la première surface interne (5A) et la deuxième surface interne (5B),
- chacun des brûleurs externes (4b) comprenant au moins une buse de décharge d'une flamme, la buse étant orientée selon un axe (A' ; A") de la buse,
- la chambre (1) possède, sur au moins une partie de la surface interne latérale (6), un profil interne (7) convexe et incurvé dans une direction de l'axe (A' ; A") de la buse de chacun des brûleurs externes (4b), le profil étant adjacent à chacun desdits brûleurs externes (4b) et en regard de l'axe (A' ; A") de la buse de chacun des brûleurs externes (4b).

7. Four selon la revendication 6, dans lequel les brûleurs externes (4b) sont configurés pour fonctionner à une puissance comprise entre 45 et 55% de celle des brûleurs internes (4a).

8. Procédé de réaménagement d'un four pour mettre en oeuvre un procédé endothermique, le four comprenant :
- une chambre de combustion (1) délimitée par une paroi (2),
- au moins un réacteur tubulaire (3) positionné dans la chambre de combustion (1),
- au moins un brûleur (4b) agencé dans la chambre de combustion (1) pour apporter au réacteur tubulaire (3) la chaleur nécessaire au procédé endothermique,
- le brûleur (3) comprenant au moins une buse de décharge d'une flamme, la buse étant orientée selon un axe (A' ; A") de la buse,
la méthode comprenant une étape de modification d'un profil interne (7) d'au moins une partie d'une surface interne de la paroi (2) de telle sorte que le profil (7) soit convexe et incurvé dans une direction de l'axe (A' ; A") de la buse, le profil (7) étant adjacent audit brûleur (4b) et en regard de l'axe (A' ; A").
